(19) Europäisches Patentamt
European Patent Office
Office européen des brevets

(11) Veröffentlichungsnummer: **0 176 499**
**B1**

(12) # EUROPÄISCHE PATENTSCHRIFT

(45) Veröffentlichungstag der Patentschrift: **13.01.88**

(51) Int. Cl.⁴: **C 22 B 7/02**

(21) Anmeldenummer: **85890226.5**

(22) Anmeldetag: **19.09.85**

(54) **Verfahren zur Rückgewinnung von Metallen aus metalloxidhältigen Hüttenstäuben sowie Anlage zur Durchführung des Verfahrens.**

(30) Priorität: **28.09.84 AT 3083/84**

(43) Veröffentlichungstag der Anmeldung: **02.04.86 Patentblatt 86/14**

(45) Bekanntmachung des Hinweises auf die Patenterteilung: **13.01.88 Patentblatt 88/2**

(84) Benannte Vertragsstaaten: **BE DE FR GB IT LU NL SE**

(56) Entgegenhaltungen:
**DE-A-3 101 374**
**DE-A-3 131 898**
**DE-B-1 010 740**
**DE-B-1 076 156**

(73) Patentinhaber: **VOEST- ALPINE Aktiengesellschaft, Muldenstrasse 5, A-4020 Linz (AT)**

(72) Erfinder: **Der Erfinder hat auf seine Nennung verzichtet**

(74) Vertreter: **Wolfram, Gustav, Dipl.- Ing., Schwindgasse 7 P.O. Box 205, A-1041 Wien (AT)**

**EP 0 176 499 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Rückgewinnung von Metallen aus metalloxidhältigen Hüttenstäuben, insbesondere Flugstäuben von Stahlwerkskonvertern, wobei die Stäube zusammen mit kohlenstoffhältigem Material durch ein rotierendes, wärmebeständiges Rohr in Richtung auf dessen Austragsende gefördert werden, in den Stäuben enthaltene Metalloxide in einer im Rohr enthaltenen heißen Zone mit reduzierender Atmosphäre unter Reduktion zu den Metallen verdampft, letztere mit den im Rohr produzierten Gasen abgezogen und der verbleibende feste Rückstand ausgetragen wird, sowie eine Anlage zur Durchführung des Verfahrens.

Ein solches Verfahren zur Rückgewinnung nützlicher Metalle - nämlich im wesentlichen von Zink und Blei - aus dem von einem metallreinigenden Hüttenofen ausgebrachten Staub ist aus der DE-A-31 31 898 bekannt. Im Inneren des nach der DE-A-31 31 898 verwendeten Drehofens wird eine Zone mit reduzierender Atmosphäre, welche den größeren Teil des Ofens einschließlich der Eingangssektion umfaßt, und eine daran anschließende Zone mit oxidierender Atmosphäre, welche die Ausgangssektion einschließt, aufrechterhalten. Die Beheizung erfolgt in der Zone mit oxidierender Atmosphäre, u.zw. durch Verbrennung eines Teiles des kohlenstoffhältigen Materials, welches mit dem Hüttenstaub in Richtung auf den Ausgang des Drehofens bewegt wird. Durch den Verbrennungsvorgang wird die Temperatur in der benachbarten Zone mit reduzierender Atmosphäre erhöht, das im Staub enthaltene $Fe_2O_3$ wird durch Bemessung der Menge des kohlenstoffhältigen Materials nur zu FeO reduziert, Zink- und Bleioxid hingegen werden zu den Metallen reduziert, wobei die Metalle verdampfen.

Beim Durchgang durch die Zone mit oxidierender Atmosphäre wird FeO wieder zu Magnetit und Eisen(III)oxid reoxidiert und dieses Oxidgemisch verläßt den Drehofen als fester Rückstand durch den Ausgang, während Zink, Blei und andere verdampfte Metalle durch den im Inneren des Drehofens vorhandenen Sauerstoff wieder zu den entsprechenden Oxiden reoxidiert und letztere zusammen mit den im Drehofen Produziertan Abgasen vom Eingang des Drehofens ausgebracht werden.

Ein beträchtlicher Nachteil des bekannten Verfahrens ist darin zu sehen, daß erhebliche Mengen kohlenstoffhältigen Materials nur zur Gewinnung der für den Reduktionsprozeß notwendigen Wärme verbrannt werden müssen.

Die rückgewonnenen Metalle werden zwar von den hauptsächlich Eisen(III)oxid enthaltenden Stäuben abgetrennt, fallen jedoch wieder als Oxide an. Auch der Eisengehalt wird als ein Gemisch von Magnetit und Eisen(III)oxid gewonnen. Infolge der stattfindenden Reoxidationsvorgänge wird somit darüber hinaus die eingebrachte Energie nicht optimal ausgenützt.

Die Erfindung bezweckt die Vermeidung der geschilderten Nachteile bekannter Verfahren und stellt sich die Aufgabe, ein Verfahren und eine Anlage zu schaffen, mit denen die für die Reduktionsprozesse notwendigen hohen Temperaturen auf besonders ökonomische Weise durch Verwertung von bisher weitgehend ungenützter Abwärme erzielt werden und wobei die Metalle einschließlich Eisen direkt in metallischer Form erhalten werden.

Die gestellte Aufgabe wird bei einem Verfahren der eingangs definierten Art erfindungsgemäß dadurch gelöst, daß das rotierende Rohr mittels von dessen Austragsende her im Gegenstrom zur Förderrichtung des Gemisches von Stäuben und kohlenstoffhältigem Material geführter, zunächst schmelzflüssiger Hüttenschlacke indirekt erhitzt wird, daß die reduzierende Atmosphäre im gesamten Rohrinnenraum aufrecht erhalten wird, die dampfförmigen Metalle aus den abgezogenen Gasen kondensiert werden und daß hochmetallisierter Eisenschwamm als Rückstand ausgetragen wird.

Die flüssige Hüttenschlacke fällt mit einer Temperatur un etwa 1630 bis 1650° C an. Der Erstarrungspunkt liegt knapp unter 1400° C.

Unter den in den Hüttenstäuben enthaltenen Oxiden stellt Zinkoxid das größte Hindernis für eine direkte Rückführung der Stäube in den Stahlerzeugungsprozeß dar. Da die Reduktion des Zinkoxids mit Kohlenstoff erst ab einer Temperatur von etwa 950° C einsetzt, wird neben anderen Metalloxiden insbesondere auch Eisenoxid gleichzeitig reduziert.

Der ausgetragene hochmetallisierte Eisenschwamm kann direkt wieder in einen Blaskonverter als Ersatz für Kühlschrott eingesetzt werden, wodurch die Stahlausbringung um ca. 1 % verbessert wird.

Die aus dem rotierenden Rohr abgezogenen Gase haben, da sie als Hauptbestandteil Kohlenmonoxid enthalten, reduzierende Eigenschaften und schützen die das Rohr verlassenden dampfförmigen Metalle, wie Zink und Blei, zuverlässig vor Reoxidation. Die abgekühlten, kondensierten Metalle konnen beispielsweise mittels eines Sack- oder Elektrofilters gesammelt werden.

Zweckmäßig wird wenigstens ein Teil der entmetallisierten Gase rückgeführt und zur zusätzlichen indirekten Beheizung des rotierenden Rohres verbrannt, wobei vorteilhaft die Gase mittels heißer Schlacke vorerhitzt werden.

Die Erfindung betrifft weiters eine Anlage mit einem rotierenden wärmebeständigen Rohr, welches am Einlaufende eine Aufgabevorrichtung für das Gemisch aus kohlenstoffhältigem Matarial und Hüttenstäuban und am Austragsende eine Ausbringvorrichtung für festen Rückstand aufweist.

Die erfindungsgemäße Anlage ist dadurch

gekennzeichnet, daß das rotierende Rohr im Bereich vor dem Austragsende von einem Drahrohrofen umgaben ist, an dessen einem Ende eine Zuflußrinne für schmelzflüssige Hüttenschlacke in das Ofeninnere mündet und unter dessen anderem Ende eine Auffangvorrichtung für die den Drehrohrofen noch in flüssigem Zustand verlassende Schlacke vorgesehen ist, an welche Auffangvorrichtung eine Transporteinrichtung für die Schlacke angeschlossen ist, und daß am Austragsende des rotierenden Rohres eine Kühleinrichtung für Gase und dampfförmige Metalle angeordnet ist.

Nach einer bevorzugten Ausführungsform ist die Zuflußrinne für die Schlacke durch ein feuerfestes, den Drehrohrofen einseitig abschließendes, weder mit dem Ofen noch mit dem Rohr verbundenes Strahlungsschild geführt.

Es ist weiters zweckmäßig, daß in der Kühleinrichtung Abscheidungsmittel zum Sammeln der durch Kühlung kondensierten dampfförmigen Metalle vorgesehen sind. Als Abscheidungsmittel können die bereits erwähnten Filterarten dienen, jedoch kommen auch Zyklone für diesen Zweck in Frage.

Vorzugsweise sind die Transporteinrichtung für die Schlacke, das Ende des Drehrohrofens mit der Auffangvorrichtung für die Schlacke und im wesentlichen der gesamte, nicht vom Drehrohrofen umgebene Abschnitt des rotierenden Rohres in einen gemeinsamen, hitzefest ausgekleideten Isolationskasten eingabaut. Die Abwurfstelle für die erstarrte Schlacke befindet sich außerhalb des Isolationskastens.

Die Schlacke wird als Foige ihrer Erstarrung auf der Transporteinrichtung mit relativ gleichmäßiger Schichtdicke erhalten und eignet sich in dieser Form besser zur Weiterverwendung als die herkömmlicherweise in Schlackenboxen mit Wasserkühlung anfallende Schlacke. Überdies unterbleibt bei der allmählichen Abkühlung auf der Transporteinrichtung jegliche Abgasbildung.

Mit Vorteil ist als Transporteinrichtung ein in nächster Nähe des rotierenden Rohres umlaufendes Plattenband vorgesehen.

Nach einer weiteren zweckmäßigen Ausbildung der Anlage ist im Strahlungsschild und gegebenenfalls im Isolationskasten jeweils wenigstens ein Gasbrenner zur Verbrennung von aus der Kühleinrichtung rückgeführten, von Metallen befreiten Gasen angeordnet.

Schließlich ist beim Einsatz feuchter Hüttenstäube zum Vortrocknen derselben besonders vorteilhaft ein zusätzlicher Drehofen im Inneren des Isolationskastens vorgesehen, wobei der Austrag des zusätzlichen Drehofens über der Aufgabevorrichtung des rotierenden Rohres angeordnet ist.

Die in den Isolationskasten durch die Wärmestrahlung der Schlacke und gegebenenfalls der Gasbrenner sowie durch den Wärmeinhalt der heißen Abgase der Gasbrenner eingebrachte Wärmemenge wird auf diese Weise bestens ausgenützt.

Die Erfindung wird im folgenden anhand der in der Zeichnung dargestellten Ausführungsform einer erfindungsgemäßen Anlage und einer Wärmebilanzrechnung noch näher erläutert.

Die mit der zur Reduktion erforderlichen Menge an kohlenstoffhältigem Material, wie Koks- oder Kohlegrus oder -staub, versetzten Hüttenstäube gelangen durch eine Aufgabevorrichtung 1 am Einlaufende in das Innere des rotierenden, wärmebeständigen Rohres 2 und werden dort in Richtung auf das Austragsende 3 gefördert, zu welchem Zweck Förderorgane - beispielsweise eine Förderspirale - im Rohr 2 vorgesehen sein können. Das Rohr kann auch geringfügig gegen die Waagrechte geneigt gelagert sein, so daß sein Austragsende 3 tiefer als das Einlaufende liegt, wobei in diesem Fall die Förderung allein durch die Wirkung der Schwerkraft bewerkstelligt wird.

Die Aufgabevorrichtung 1 ist als Schleuse ausgebildet, um das Ausströmen der bei der Reduktion entstehenden Gase und Metalldämpfe sowie einen etwaigen Luftzutritt in das Rohrinnere zu verhindern.

Schmelzflüssige, in einem feuerfest ausgemauerten Puffergefäß 4 zwischengespeicherte Hüttenschlacke wird über eine Zuflußrinne 5 einem Drehrohrofen 6 zugeführt. Der Ofen 6 umgibt das Rohr 2 im Bereich vor dessen Austragsende 3. Die Zuflußrinne 5 mündet an dem höher gelagerten und dem Austragsende 3 nächstliegenden Ende des Drehrohrofens 6 in das Ofeninnere und die Schlacke wird in Richtung der Pfeile 7 im Gegenstrom zu dem im rotierenden Rohr 2 geförderten Gemisch geführt. Um Wärmeverluste zu vermeiden, ist der Drehrohrofen 6 an seinem höher gelagerten Ende stirnseitig mit einem Strahlungsschild 8, welches jedoch nicht mit dem Ofen 6 verbunden ist und eine Öffnung für das Rohr 2 aufweist, abgeschlossen, und die Zuflußrinne 5 ist durch diesen Strahlungsschild 8 geführt. Die Drehbewegung des rotierenden Rohres 2 ist vorzugsweise gegenläufig zu jener des Drehrohrofens 6, wie in der Zeichnung durch die achsennahen gekrümmten Pfeile angedeutet ist.

Die Länge des Drehrohrofens 6 ist so bemessen, daß die Schlacke in gerade noch flüssigem Zustand in die Auffangvorrichtung 9 unter dessen tiefer liegendem Ende und von dort auf die angeschlossene Transporteinrichtung 10, welche schematisch als umlaufendes Plattenband dargestellt ist, gelangt. Das Plattenband mit der erstarrenden bzw. bereits erstarrten, aber noch heißen Schlacke wird möglichst nahe an das rotierende Rohr 2 herangeführt, um die abgegebene Wärme zur Vorreduktion der Hüttenstäube optimal auszunutzen.

Das tiefer liegende Ende des Drehrohrofens 6 mit der Auffangvorrichtung 9, die Transporteinrichtung 10 und der gesamte, nicht vom Drehrohrofen 6 umgebene Abschnitt des

Rohres 2 mit Ausnahme des einlaufseitigen Rohrendes sind in einen gemeinsamen, hitzefest ausgekleideten Isolationskasten 11 eingebaut, um Wärmeverluste noch weiter zu vermindern. Auch die Abwurfstelle 12 der erstarrten Schlacke von der Transporteinrichtung 10 befindet sich außerhalb des Isolationskastens 11. Aus der Schlacke kann beispielsweise darin noch enthaltenes metallisches Eisen durch Magnetabscheidung rückgewonnen werden.

Zur Vortrocknung feuchter Hüttenstäube ist ein zusätzlicher Drehofen 13 im Inneren des Isolationskastens 11 vorgesehen. Um das Einsatzgut gegen die Rohrneigung zu fördern, muß der Drehofen 13 mit - nicht gezeigten - Förderorganen ausgestattet sein. Der Austrag 14 des Drehofens 13 ist über der Aufgabevorrichtung 1 des rotierenden Rohres 2 angeordnet. Durch den Austrag 14 können auch die entwickelten Wasserdämpfe entweichen.

Die im Inneren des rotierenden Rohres 2 durch Reaktion des an die Metalle gebundenen Sauerstoffes mit Kohlenstoff entstehenden, vornehmlich aus Kohlenmonoxid bestehenden Gase werden vom Austragsende 3 des rotierenden Rohres 2 gemeinsam mit den bei der Reduktion gebildeten Metalldämpfen und dem festen Rückstand abgezogen. Die dampfförmigen Metalle und die Gase gelangen, ohne mit Luft in Berührung zu kommen, in die Kühleinrichtung 15, in welcher die Metalle kondensieren und in schematisch dargestellten Abscheidungsmitteln 16 gesammelt werden. Die entmetallisierten CO-hältigen Gase werden unmittelbar über Leitungen 17 und gegebenenfalls 18 einem oder mehreren Gasbrennern 19, 19' zugeführt und unter Zufuhr von Sauerstoff verfeuert. Die Gasbrenner 19 sind im Strahlungsschild 8 angeordnet. Ein oder mehrere weitere Gasbrenner 19' können - falls erforderlich - im Isolationskasten 11 angeordnet sein.

Der feste Rückstand, welcher im wesentlichen aus hochmetallisiertem Eisenschwamm besteht, wird nach Varlassen des rotierenden Rohres 2 durch die Ausbringvorrichtung 20, welche so ausgebildet ist, daß sie gleichzeitig als Luftschleuse fungiert, entfernt und in den Stahlerzeugungsprozeß rückgeführt. Nach Verlassen des Rohres 2 an dessen Austragsende 3 befindet sich der Eisenschwamm noch ausreichend lange Zeit im kohlenmonoxidhältigen Gasraum, um so weit abzukühlen, daß im Anschluß an die Ausbringvorrichtung 20 unter Lufteinwirkung keine nennenswerten Reoxidationsvorgänge mehr stattfinden.

Die bisher üblichen umweltbelastenden Deponien für Hüttenstäube erübrigen sich und die damit verbundenen Kosten entfallen.

Die aus der Hüttenschlacke verfügbare und die durch Verbrennung der CO-hältigen Gase gewonnene Wärmemenge reicht für die Durchführung des Reduktionsprozesses auch unter Berücksichtigung der unvermeidlichen Abstrahlungsverluste der Anlage aus, wie aus nachstehender Wärmebilanzrechnung ersichtlich ist:

Die Reduktion des in den Hüttenstäuben als Hauptbestandteil enthaltanen Eisen(III)oxids mit Kohlenstoff läuft in drei Stufen bei jeweils unterschiedlichen Temperaturen ab:

$3\ Fe_2O_3 + C \rightarrow 2\ Fe_3O_4 + CO$ ab einer Temperatur von ca. 330° C (I)

$2\ Fe_3O_4 + 2C \rightarrow 6\ FeO + 2\ CO$ ab einer Temperatur von ca. 680° C (II)

$6\ FeO + 6\ C \rightarrow 6\ Fe + 6\ CO$ ab einer Temperatur von ca. 730° C (III)

In Stufe (I) werden zur Aufheizung von 3 Mol $Fe_2O_3$ und 1 Mol C von 25° C auf 330° C 117,2 kJ benötigt, für die endotherme Reaktion sind 130,2 kJ in Rechnung zu stellen.

Stufe (II): Aufheizen:
2 Mol $Fe_3O_4$ und 2 Mol C
von 330° C auf 680° C:
174,6 kJ
Reaktionswärme: 348,3 kJ.

Stufe (III): Aufheizen:
6 Mol FeO und 6 Mol C
von 680° C auf 730° C:
22,6 kJ
Reaktionswärme: 933,7 kJ

Weiters ist für die Reduktion von 3 Mol $Fe_2O_3$ erforderlich, 8 Mol C von 25° C auf 370° C und 6 Mol C vor 330° C auf 680° C zu erwärmen, was eine Energie von insgesamt 73,3 kJ erfordert.

Die zur Reduktion von 3 Mol $Fe_2O_3$ (479,1 g) erforderliche Gesamtenergie beträgt somit 1,8 MJ.

Zur Reduktion von 1 kg Eisen(III)oxid sind theoretisch 3,757 MJ aufzuwenden, um 0,7 kg Eisen zu erhalten.

Da beispielsweise das Zinkoxid - wie bereits eingangs erwähnt - mit Kohlenstoff erst ab einer Temperatur von 950° C zu reagieren beginnt, muß das gebildete Eisen noch von 730° C auf 950° C gebracht werden, wofür weitere 171,7 kJ pro kg $Fe_2O_3$ in Rechnung zu stellen sind.

Die zur Erwärmung und Reduktion von ZnO und der weiteren Metalloxide erforderliche Wärme ist vernachlässigbar, da in den Hüttenstäuben üblicherweise nur etwa 2 bis 3 Massen % ZnO enthalten sind.

Als theoretischer Gesamtenergiebedarf zur Reduktion von 1 kg Hüttenstäuben läßt sich demnach unter der Annahme, daß die Hüttenstäube im wesentlichen aus $Fe_2O_3$ bestehen, ein Wert von 3,929 MJ errechnen.

In LD-Stäuben, welche üblicherweise nach Naßentstaubung über einen Eindicker und Hochdruckfilterkerzen in Form kompakter Schülpen anfallen, wird ein durchschnittlicher Gehalt von etwa 73,0 Massen % $Fe_2O_3$ festgestellt. Der Rest besteht zum überwiegenden Teil aus Calciumoxid, das infolge der Naßentstaubung als Hydrat [$Ca(OH)_2$] vorliegt. Weiters ist der bereits erwähnte Gehalt an ZnO ermittelbar. Schließlich sind noch

unbedeutende Mengen an Silicium-, Aluminium-, Bleioxid und Oxide anderer Metalle in den Stäuben enthalten.

Bei Höchsttemperaturen um etwa 960° C wird mit Sicherheit ein Aufschmelzen des vorhandenen CaO mit $SiO_2$, $Al_2O_3$ sowie mit den Aschebestandteilen des kohlenstoffhältigen Materials zu einer Schlacke unter Wärmeverbrauch vermieden. Ein Energiebeitrag muß jedoch auch zur Erwärmung der erwähnten Begleitstoffe von Umgebungstemperatur (ca. 25° C) auf 960° C veranschlagt werden. Dieser Beitrag läßt sich nach der Formel

$$Q = m \cdot C_p \cdot \Delta T$$

errechnen, worin Q die Wärmemenge, m die Masse der Begleitstoffe, $C_p$ die spezifische Wärme und $\Delta T$ die Temperaturdifferenz bedeutet.

Die Masse der in den Schülpen enthaltenen Begleitstoffe beträgt für jedes kg $Fe_2O_3$ etwa 370 g,

$C_p = 1{,}256\ J \cdot C^{-1} \cdot g^{-1}$,

$\Delta T = 935°C$.

Der zur Erwärmung der Begleitstoffe notwendige Energiebeitrag Q errechnet sich somit zu 434,5 kJ zusätzlich für jedes kg eingesetzten Eisen(III)oxides.

Berücksichtigt man für den Fall von Einsatzprodukten aus der Naßentstaubung noch eine Feuchte von 10 % in den Schülpen, so sind für die Trocknung dieser Einsatzprodukte weitere 293,1 kJ/kg trockenen Hüttenstaubes erforderlich.

Da die flüssige Hüttenschlacke mit einer Temperatur von 1630° C bis 1650° C anfällt und knapp unter 1400° C erstarrt, beträgt die nutzbare Temperaturdifferenz im flüssigen Bereich der Schlacke etwa 200° C.

Die spezifische Wärme der Schlacke im betrachteten Temperaturbereich beträgt etwa 1,256 kJ/kg.° C. Die Schlackenmasse pro Konvertercharge beträgt im Mittel etwa 15 Massen-% vom Stahlgewicht. Für einen 100 t-Tiegel fallen daher pro Abstich ca. 15 t Schlacke an. Die fühlbare Wärme im oben angeführten flüssigen Bereich der Stahlwerksschlacke beträgt somit $15000 \cdot 1{,}256 \cdot 200 = 3{,}768 \cdot 10^3$ MJ/Abstich. Diese Wärmemenge steht für die Reduktion des Hüttenstaubes primär zur Verfügung.

Weiters steht gegebenenfalls die Verbrennungswärme des bei der Reduktion erhaltenen Kohlenmonoxids zur Verfügung. Es ist bekannt, daß etwa 0,8 bis 1 % des in einem LD-Tiegel gewonnenen Stahles in Form von Blasstaub verloren geht. In einem 100 t-Tiegel sind das - als $Fe_2O_3$ gerechnet - 1140 bis 1430 kg. Bei der Reduktion dieser pro Konvertercharge anfallenden Menge an Eisenoxid mit Kohlenstoff entstehen theoretisch 480 bis 602 $m^3$ CO (unter Normalbedingungen). Pro Konvertercharge sind das weitere $6{,}0 \cdot 10^3$ bis $7{,}5 \cdot 10^3$ MJ. Insgesamt stehen also $9{,}77 \cdot 10^3$ bis $1{,}13 \cdot 10^4$ MJ je Konvertercharge zur Verfügung.

Da die aus der Schlacke verfügbare und die aus der Verbrennung der reduzierenden Gase resultierende Wärmemenge mehr als das Doppelte der zur Aufwärmung und Reduktion der anfallenden Hüttenstäube unter der Annahme, daß letztere aus reinem Eisen(III)oxid bestehen, theoretisch notwendigen Energiemenge beträgt, können die Energiebeiträge zur Erhitzung etwaiger Begleitstoffe auf Reduktionstemperatur sowie zur Trocknung feuchter Einsatzprodukte leicht aufgebracht werden, selbst wenn beträchtliche Abstrahlungsverluste auftreten sollten.

## Patentansprüche

1. Verfahren zur Rückgewinnung von Metallen aus metalloxidhältigen Hüttenstäuben, insbesondere Flugstäuben von Stahlwerkskonvertern, wobei die Stäube zusammen mit kohlenstoffhältigem Material durch ein rotierendes, wärmebeständiges Rohr (2) in Richtung auf dessen Austragsende (3) gefördert werden, in den Stäuben enthaltene Metalloxide in einer im Rohr (2) enthaltenen heißen Zone mit reduzierander Atmosphäre unter Reduktion zu den Metallen verdampft, letztere mit den im Rohr produzierten Gasen abgezogen und der verbleibende feste Rückstand ausgetragen wird, dadurch gekennzeichnet, daß das rotierende Rohr (2) mittels von dessen Austragsende (3) her im Gegenstrom zur Förderrichtung des Gemisches von Stäuben und kohlenstoffhältigem Material geführter, zunächst schmelzflüssiger Hüttenschlakke indirekt erhitzt wird, daß die reduzierende Atmosphäre im gesamten Rohrinnenraum aufrecht erhalten wird, die dampfförmigen Metalle aus den abgezogenen Gasen kondensiert werden und daß hochmetallisierter Eisenschwamm als Rückstand ausgetragen wird.

2. Verfahren nach Anspruch 1, dadurch gekennzeichnet, daß wenigstens ein Teil der entmetallisierten Gase rückgeführt und zur zusätzlichen indirekten Beheizung des rotierenden Rohres (2) verbrannt wird.

3. Verfahren nach Anspruch 2, dadurch gekennzeichnet, daß die Gase mittels heißer Schlacke vorerhitzt werden.

4. Anlage zur Durchführung des Verfahrens nach einem oder mehreren der Ansprüche 1 bis 3 mit einem rotierenden wärmebeständigen Rohr (2), welches am Einlaufende eine Aufgabevorrichtung (1) für das Gemisch aus kohlenstoffhältigem Material und Hüttenstäuben und am Austragsende (3) eine Ausbringvorrichtung (20) für festen Rückstand aufweist, dadurch gekennzeichnet, daß das

rotierende Rohr (2) im Bereich vor dem Austragsende (3) von einem Drehrohrofen (6) umgeben ist, an dessen einem Ende eine Zuflußrinne (5) für schmelzflüssige Hüttenschlacke in das Ofeninnere mündet und unter dessen anderem Ende eine Auffangvorrichtung (9) für die den Drehrohrofen (6) noch in flüssigem Zustand verlassende Schlacke vorgesehen ist, an welche Auffangvorrichtung (9) eine Transporteinrichtung (10) für die Schlacke angeschlossen ist, und daß am Austragsende (3) des rotierenden Rohres (2) eine Kühleinrichtung (15) für Gase und dampfförmige Metalle angeordnet ist.

5. Anlage nach Anspruch 4, dadurch gekennzeichnet, daß die Zuflußrinne (5) für die Schlacke durch ein feuerfestes, den Drehrohrofen (6) einseitig abschließendes, weder mit dem Ofen (6) noch mit dem Rohr (2) verbundenes Strahlungsschild (8) geführt ist.

6. Anlage nach einem oder beiden der Ansprüche 4 und 5, dadurch gekennzeichnet, daß in der Kühleinrichtung (15) Abscheidungsmittel (16) zum Sammeln der durch Kühlung kondensierten dampfförmigen Metalle vorgesehen sind.

7. Anlage nach einem oder mehreren der Ansprüche 4 bis 6, dadurch gekennzeichnet, daß die Transporteinrichtung (10) für die Schlacke, das Ende des Drehrohrofens (6) mit der Auffangvorrichtung (9) für die Schlacke und im wesentlichen der gesamte, nicht vom Drehrohrofen (6) umgebene Abschnitt des rotierenden Rohres (2) in einem gemeinsamen, hitzefest ausgekleideten Isolationskasten (11) eingebaut sind.

8. Anlage nach einem oder mehreren der Ansprüche 4 bis 7, dadurch gekennzeichnet, daß als Transporteinrichtung ein in nächster Nähe des rotierenden Rohres (2) umlaufendes Plattenband (10) vorgesehen ist.

9. Anlage nach einem oder mehreren der Ansprüche 4 bis 8, dadurch gekennzeichnet, daß im Strahlungsschild (8) und gegebenenfalls im Isolationskasten (11) jeweils wenigstens ein Gasbrenner (19, 19') zur Verbrennung von aus der Kühleinrichtung (15) rückgeführten, von Metallen befreiten Gasen angeordnet ist.

10. Anlage nach einem oder mehreren der Ansprüche 7 bis 9, dadurch gekennzeichnet, daß ein zusätzlicher Drehofen (13) im Inneren des Isolationskastens (11) vorgesehen ist, wobei der Austrag (14) des zusätzlichen Drehofens (13) über der Aufgabevorrichtung (1) des rotierenden Rohres (2) angeordnet ist.

## Claims

1. A method of recovering metals from metal-oxide-containing metallurgical dusts, in particular fine dusts from steel works converters, wherein the dusts together with carbonaceous material are conveyed through a rotating, heat-resistant pipe (2) in the direction to its discharge end (3), metal oxides contained in the dusts are evaporated to the metals under reduction in a hot zone with reducing atmosphere contained in the pipe (2), which metals are drawn off with the gases produced in the pipe and the solid residue remaining is discharged, characterised in that the rotating pipe (2) is indirectly heated by means of metallurgical slag which is molten at first and is guided from the discharge end (3) of the pipe in counterflow to the conveying direction of the mixture of dusts and carbonaceous material, that the reducing atmosphere is maintained in the entire pipe interior, the vaporized metals from the drawn-off gases are condensed and that highly metallized sponge iron is discharged as the residue.

2. A method according to claim 1, characterised in that at least a part of the demetallized gases is recycled and burnt for additionally indirectly heating the rotating pipe (2).

3. A method according to claim 2, characterised in that the gases are pre-heated by means of hot slag.

4. A plant for carrying out the method according to one or several of claims 1 to 3 with a rotating, heatresistant pipe (2), which, at its supply end, is provided with a feeder means (1) for the mixture of carbonaceous material and metallurgical dusts, and, at its discharge end (3), is provided with a discharge means (20) for solid residue, characterised in that the rotating pipe (2), in the region in front of the discharge end (3), is surrounded by a rotary kiln (6) at whose one end a supply channel (5) for molten metallurgical slag enters into the furnace interior and below whose other end a collecting means (9) for the slag leaving the rotary kiln (6) in still liquid state is provided, to which collecting means (9) a transporting means (10) for the slag is connected, and that at the discharge end (3) of the rotating pipe (2) a cooling means (15) for gases and vaporized metals is arranged.

5. A plant according to claim 4, characterised in that the supply channel (5) for the slag is guided through a refractory radiation screen (8) closing the rotary kiln (6) at one side and connected neithar with the kiln (6) nor with the pipe (2).

6. A plant according to one or both of claims 4 and 5, characterised in that deposit means (16) are provided in the cooling means (15) for collecting the vaporized metals condensed by cooling.

7. A plant according to one or several of claims 4 to 6, characterised in that the transporting means (10) for the slag, the end of the rotary kiln (6) with the collecting means (9) for the slag and substantially the entire portion of the rotating pipe (2) that is not surrounded by the rotary kiln (6) are installed in a common insulation box (11) that is heat-resistantly lined.

8. A plant according to one or several of claims 4 to 7, characterised in that a plate belt (10) circulating in the closest vicinity of the rotating

pipe (2) is provided as the transporting means.

9. A plant according to one or several of claims 4 to 8, characterised in that at least one gas burner (19, 19') each is arranged in the radiation screen (8) and possibly in the insulation box (11) for burning the gases recycled from the cooling means (15) and freed from metals.

10. Arrangement according to one or several of claims 7 to 9, characterised in that an additional rotary kiln (13) is provided in the interior of the insulation box (11), the discharge (14) of the additional rotary kiln (13) being arranged above the feeder-means (1) of the rotating pipe (2).

**Revendications**

1. Procédé pour la récupération de métaux à partir de poussières d'usines métallurgiques contenant des oxydes métalliques, en particulier de poussières volantes de convertisseurs d'aciérie, selon lequel on transporte les poussières ensemble avec du matériau contenant du carbone à travers un tube tournant (2), résistant à la chaleur, en direction de son extrémité de sortie (3), on réduit les oxydes métalliques contenus dans les poussières en métaux par vaporisation dans une zone chaude à atmosphère réductrice contenue dans le tube (2), on extrait les métaux avec les gaz produits dans le tube et on évacue le résidu solide restant, caractérisé en ce que l'on chauffe le tube tournant (2) indirectement par du laitier métallurgique, en fusion au départ, que l'on envoie, à partir de l'extrémité de sortie (3) du tube, à contre-courant avec la direction de transport du mélange de poussières et de matériau contenant du carbone, que l'on maintient l'atmosphère réductrice dans tout l'espace intérieur du tube, or sépare les métaux à l'état de vapeur des gaz extraits par condensation et que l'on évacue de l'éponge de fer hautement métallisée en tant que résidu.

2. Procédé selon la revendication 1, caractérisé en ce que l'on réintroduit et on brûle une partie au moins des gaz démétallisés en vue d'un chauffage indirect supplémentaire du tube tournant (2).

3. Procédé selon la revendication 2, caractérisé en ce que l'on préchauffe les gaz au moyen de laitier chaud.

4. Installation pour la mise en oeuvre du procédé selon une ou plusieurs des revendications 1 à 3, comprenant un tube tournant (2), résistant à la chaleur, qui présente à l'extrémité d'entrée un dispositif de chargement (1) pour le mélange de matériau contenant du carbone et de poussières métallurgiques et à l'extrémité de sortie (3) un dispositif d'évacuation (20) pour un résidu solide, caractérisée en ce que le tube tournant (2) est entouré, dans la région précédant l'extrémité de sortie (3), par un four tubulaire rotatif (6), à une extrémité duquel une rigole (5) d'amenée de laitier métallurgique en fusion débouche à l'intérieur du four et sous l'autre extrémité duquel est prévu un dispositif récepteur (9) pour recueillir le laitier, encore à l'état liquide, quittant le four tubulaire rotatif, auquel dispositif récepteur (9) est raccordé un dispositif de transport (10) pour le laitier, et qu'un dispositif de refroidissement (15) pour gaz et métaux à l'état de vapeur est placé à l'extrémité de sortie (3) du tube tournant.

5. Installation selon la revendication 4, caractérisée en ce que la rigole (5) pour l'amenée du laitier traverse un écran réfractaire (8) contre les rayonnements, écran qui ferme le four tubulaire rotatif (6) d'un côté et n'est pas relié à ce four (6), ni au tube (2).

6. Installation selon une des revendications 4 et 5, ou selon les deux, caractérisée en ce que des moyens de séparation (16) sont prévus dans le dispositif de refroidissement (15) pour collecter les métaux, arrivant à l'état de vapeur et condensés par refroidissement.

7. Installation selon une ou plusieurs des revendications 4 à 6, caractérisée en ce que le dispositif de transport (10) pour le laitier, l'extrémité du four tubulaire rotatif (6) avec le dispositif récepteur (9) pour recueillir le laitier, ainsi que pratiquement toute la partie du tube tournant (2) non entourée par le four tubulaire rotatif (6), sont enfermés dans un caisson isolant commun (11), muni d'un garnissage résistant à la chaleur.

8. Installation selon une ou plusieurs des revendications 4 à 7, caractérisée en ce que le dispositif de transport est un tablier métallique (10) amené à circuler à proximité immédiate du tube tournant (2).

9. Installation selon une ou plusieurs des revendications 4 à 8, caractérisée en ce qu'au moins un brûleur à gaz (19, 19') est monté dans l'écran (8) contre les rayonnements et, éventuellement, dans le caisson isolant (11), pour brûler des gaz recyclés depuis le dispositif de refroidissement (15) et débarrassés de métaux.

10. Installation selon une ou plusieurs des revendications 7 à 9, caractérisée en ce qu'un four rotatif supplémentaire (13) est disposé dans le caisson isolant (11), de manière que la sortie (14) de ce four supplémentaire (13) soit située au-dessus du dispositif de chargement (1) du tube tournant (2).

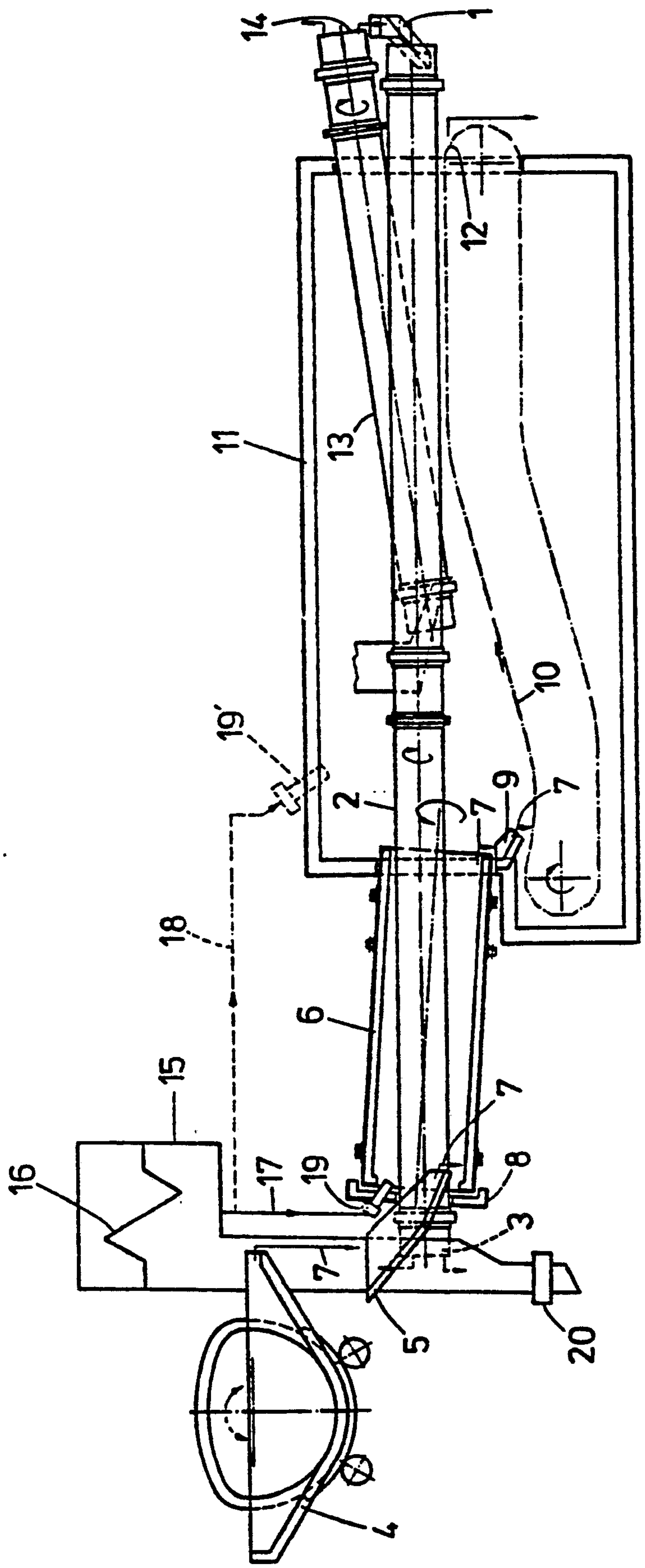
1
2
3
4
5
6
7
8
9
10
11
12
13
14
15
16
17
18
19
19'
20